# EUROPEAN PATENT SPECIFICATION

(11) **EP 0 511 265 B1**
(45) Date of publication and mention of the grant of the patent: **08.06.1994**
(21) Application number: 91902467.9
(22) Date of filing: 19.12.1990
(51) Int. Cl.: F16J 15/12, F16J 15/10, F02F 11/00, B32B 29/00, B32B 27/38, B29D 9/00

(54) **SEALING GASKET ASSEMBLY, METHOD OF MANUFACTURE, AND METHOD OF APPLICATION**
DICHTUNGSANORDNUNG, VERFAHREN ZU DEREN HERSTELLUNG UND VERWENDUNGSVERFAHREN
STRUCTURE DE JOINT D'ETANCHEITE, PROCEDE DE FABRICATION ET PROCEDE D'APPLICATION

(30) Priority: 16.01.1990 US 465716
(43) Date of publication of application: 04.11.1992
(73) Proprietor: W.L. GORE & ASSOCIATES, INC., Newark, Delaware 19714-9206 (US)
(72) Inventor: BILAS, John, E., Childs, MD 21916 (US); JOHNSON, Michael, E., Greenville, SC 29607 (US)
(74) Representative: Martin, Jean-Jacques
(86) International application number: US9007534
(87) International publication number: WO9110851

(56) References cited:
- DE-A- 2 536 936
- DE-A- 2 828 475
- US-A- 2 532 011
- US-A- 3 854 736
- US-A- 4 223 897
- US-A- 4 635 948

## Description

### FIELD OF THE INVENTION

The invention relates to composite sealing gaskets and to methods for applying gaskets or sealants to substrates.

### BACKGROUND OF THE INVENTION

There are two commonly used methods of applying gaskets or sealants to substrates: rigid drop-in-place and non-rigid form-in-place. There is a need to provide a sealant form between these two general methods that combines the sealing benefits of form-in-place materials with the handling advantages of drop-in-place materials and is useful for hand installation in an assembly operation or in the replacement part market, such as gaskets for hand insertion between automobile drive train parts and the like. Accurately placing a form-in-place gasket on a substrate when the shape of the gasket is complicated by many convolutions and apertures is sometimes difficult by hand and may be quite expensive to do by automated mechanical methods.

One example of a gasket which has a sealing compound layer, a removable carrier paper, and a flexible film cover is that disclosed by Buecken, et al., in U.S. Patent 4,759,962. Incompressible spacers are sandwiched in this gasket assembly to aid the gasket in withstanding surface pressure which can force the sealant out of the edges of the gasket assembly. Materials such as release papers, cover films, and adhesives of varying adhesion strength suitable for use in sealing gasket assemblies are exemplified in U.S. Patent 4,629,634.

Robots have been used to sandwich the layers of gasket assemblies together and also to apply a strip of sealing gasketing directly to a substrate. Where the path for accurate lay-down of the strip of gasketing is complicated, the robot may become complicated and expensive to construct and to operate. Peeling off layers or carrier sheets in proper order from a gasket assembly, then applying the remainder of the assembly to a substrate can further complicate proper installation of the gasket and increase the cost.

Because of its chemical, biological inertness, and lubricity, polytetrafluoroethylene (PTFE) has found wide application as a packing material in the food, chemical, and pharmaceutical industry. In the 1970's a new form of PTFE became available which was unique in that it combined high porosity with high strength. The process for manufacturing this unique product is described in U.S. Patents 3,953,566, 4,187,390, 4,096,227 and 3,962,153.

### SUMMARY OF THE INVENTION

The invention comprises a composite sealing gasket assembly including a microporous polymer sealing gasketing material layered on one side with high-adhesion adhesive with or without a polymer film carrier layer and a cover layer of release paper. On the other side of the microporous polymer gasketing layer is layered a low-adhesion adhesive for holding the gasket to a carrier sheet. The carrier sheet is used to aid the installation of the gasket to the substrate. The process for preparing the assembly and the process for applying the assembly to a substrate also constitute a part of the invention.

### BRIEF DESCRIPTION OF THE DRAWINGS

Figure 1 shows a cross-section of a preferred gasket assembly of the invention.

Figure 2 describes schematically a process for preparing an assembly of the invention.

Figure 3 depicts an assembly of the invention with appropriate layers peeled back from the assembly for proper attachment of the sealing gasket to surfaces of substrates to be gasketed.

Figure 4 is a perspective cross-section showing an assembly peeled back to expose the gasketing lying on an adhesive layer.

Figure 5 shows a cross-section of a gasket assembly of the invention.

### DETAILED DESCRIPTION OF THE INVENTION

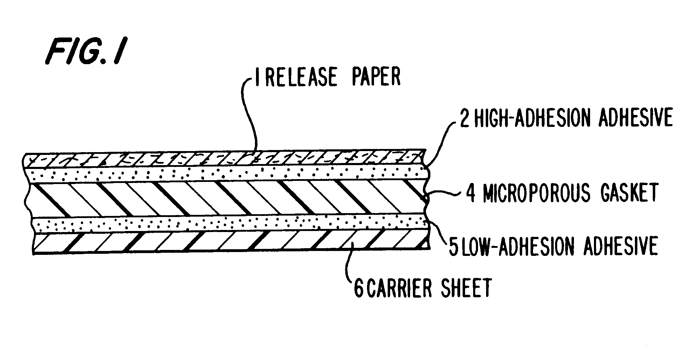

Referring now to the figures to describe in detail the invention, Figure 1 shows a cross-section of a preferred sealing gasketing assembly of the invention with microporous gasket 4 layered together with a high-adhesion adhesive 2 adhering gasket 4 to release paper 1. On the opposite side of gasket 4 is a layer of low-adhesion adhesive 5 which is covered with a carrier sheet 6 to maintain the shape of the assembly and to prevent adherence to substrates prematurely before the gasket assembly is unpackaged from an outer wrapper, unrolled, or otherwise made ready for utilization of or application of the gasket to a substrate intended to be gasketed. Release paper 1 also protects gasket 4 until it is ready to be placed between two substrates to be gasketed. Layer 4 is preferably the microporous polytetrafluoroethylene (PTFE) disclosed in U.S. Patents 3,953,566, 4,187,390, 4,096,227, and 3,962,153 and may comprise more than one layer, such as a PTFE film - elastomeric filled PTFE film sandwich.

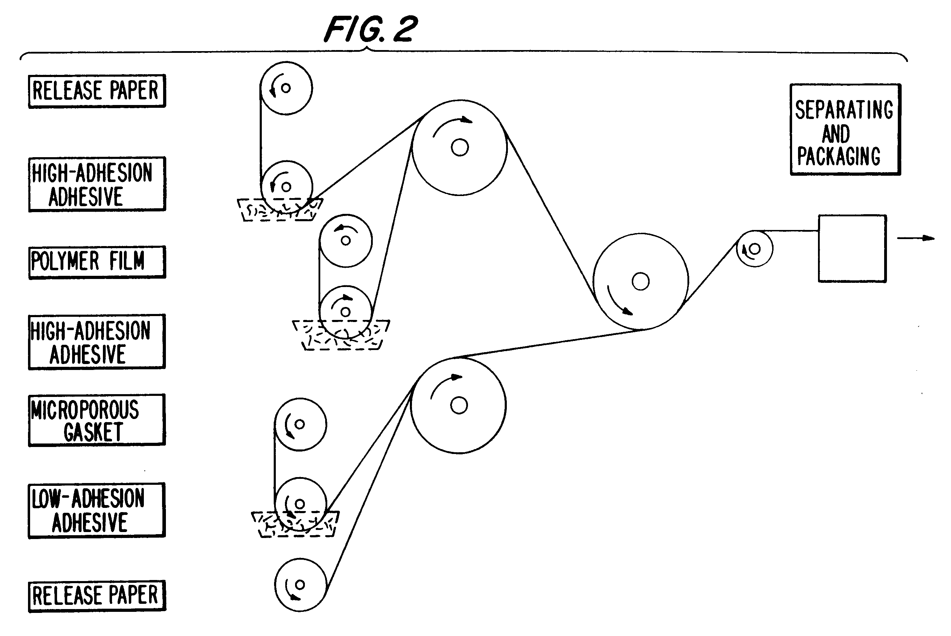

A method for preparing the sealing gasketing of the invention is diagrammed in Figure 2. A roll of microporous gasketing material 4 is coated with low-adhesion adhesive either in film form from a roll or alternatively sprayed onto the film in a solution in a solvent which coating is dried before the microporous gasket material is combined with a carrier sheet to protect the gasket and the adhesive surface until use of the gasket. Release paper is layered onto a polymer carrier film which is coated by a known method, such as film or solution coating, with a high-adhesion adhesive on each side. This layered construction is adhered to the clean gasket material surface of the previously described gasket low-adhesion adhesive-carrier sheet construction. The combined constructions, the assembly of the invention, may be divided into separate sealing gaskets and packaged for storage and sale.

An alternative process may be a combination of layers 1, 2, 3, and 2 upon which layer 4 may be laid out in a pattern by robot means to follow the contours of a predetermined gasket pattern with proper spacing of the gasket on the pattern of gasketing away from apertures and edges. Other variations in known layering techniques common in the composite polymer film art may be utilized where they provide a properly protected gasket which is easily utilizable to place a gasket properly and easily between two substrates to be gasketed with accurate placement and easy avoidance of error in the gasketing operation.

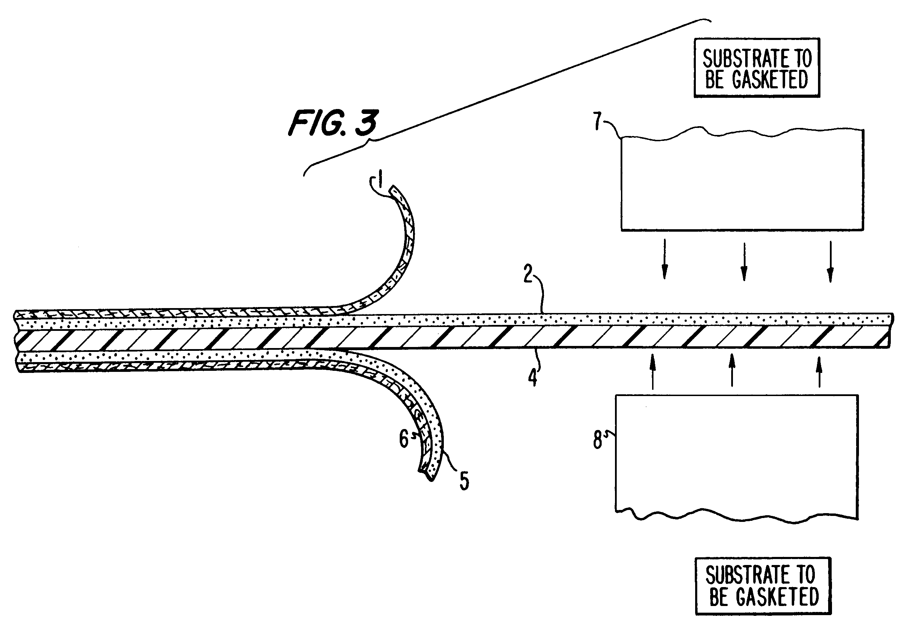

Figure 3 describes a method for use of the gasket assembly to gasket two substrates 7 and 8. Release paper 1 is peeled away from the assembly which is then adhered with proper accurate positioning by hand on substrate 7, which may be an internal combustion engine cylinder head for instance. On the opposite side of the assembly, carrier sheet 6 and its coating of low-adhesion adhesive 5 is pulled from the surface to leave a surface of gasket material 4 upon which substrate 8, a valve cover for instance in this case, is laid to provide easy accurate gasketing of substrates 7 and 8.

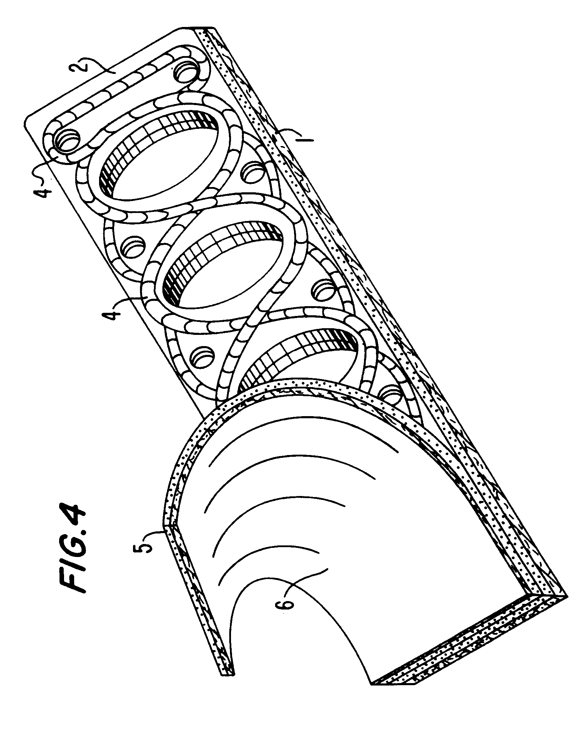

Another illustration of the assembly of the invention is shown in Figure 4, in which the assembly has layers 5 and 6 peeled back to expose gasketing material 4 laid out in a carefully positioned pattern on adhesive layer 2. Release paper 1 is adhered to adhesive layer 2.

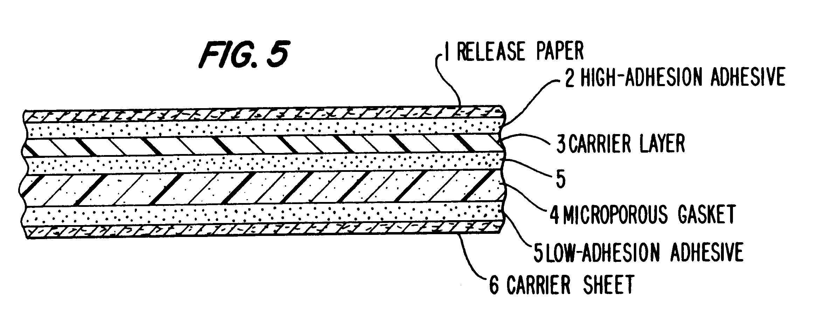

Figure 5 describes an alternative embodiment of the assembly of the invention wherein an optional polymer film carrier layer 3 is utilized to aid in applying layers of high-adhesion adhesive 2 to the microporous gasket 4. Adhesive 2 is protected by a release paper 1 on the outside. Suitable polymer film materials for layer 3 may include, for example, polyester or tissue paper, or the like.

Useful high-adhesion adhesives 2 may include high shear-strength rubber based pressure sensitive adhesives or hot melt systems.

Low-adhesion adhesives 5 which may be used include acrylic polymer pressure sensitive adhesives or other removable/repositionable adhesives.

Useful microporous polymers for gasket material 4 include the microporous PTFE described in the U.S. Patents listed above, a mat of fibrillated PTFE fibers, and filled PTFE both stretched and unstretched, the filling material including such materials as carbon, glass fibers, chopped glass fibers, glass microballoons, dyes, and pigments.

The above methods can be modified by those skilled in the art to include other methods of laying down layers, peeling layers, and other processes both hand and machine operated for applying adhesives to various layers and for bonding layers of plastic film, adhesive, and gasketing together.

## Claims

1. A composite sealing gasket assembly comprising:
(a) a first layer of release paper (1) adhered to;
(b) a second layer of high-adhesion adhesive (2) which is applied to;
(c) a third layer of microporous polymer sealing gasketing material (4) which is adhered on one side to said second layer adhesive (2) and on the other side to;
(d) a fourth layer of low-adhesion adhesive (5) upon which is layered and adhered on the other side to;
(e) a fifth assembly supportive carrier sheet (6) layer.

2. An assembly of Claim 1 wherein said third layer (4) comprises microporous polytetrafluoroethylene, a mat of fibrillated polytetrafluoroethylene fibers, stretched filled polytetrafluoroethylene, or unstretched filled polytetrafluoroethylene.

3. A process for assembling the sealing gasket assembly of Claims 1 or 2.

4. A process for preparing a sealing gasket assembly which comprises a first layer of release paper (1), a second layer of high-tack adhesive (2), a third layer of microporous polymer sealing gasketing (4), a fourth layer of low-tack adhesive (5) and a fifth layer of carrier sheet (6) comprising the steps:
(a) assembling and adhering together said layers one (1) and two (2) by known bonding processes for application of adhesives to release papers and layering said adhesive together with a release paper into a unit;
(b) adhering the adhesive side (2) of said unit of layers one and two to one side of said third layer of microporous polymer sealing gasketing material (4); and
(c) adhering to the other side of said third layer the adhesive side (5) of the unit of the fourth layer of low-tack adhesive (5) pre-assembled onto the fifth layer of carrier sheet (6).

5. A process of Claim 4 wherein said third layer (4) comprises microporous polytetrafluoroethylene.

6. A sealing gasket assembly prepared by the process of Claim 4.

7. A process for applying to a substrate a sealing gasket assembly of a first layer of release paper (1), a second layer of high-adhesion adhesive (2), a third layer of microporous polymer gasketing material (4), a fourth layer of low-adhesion adhesive (5), and a fifth layer of carrier sheet (6) comprising the steps of:
(a) removing said first layer (1) from said assembly;
(b) applying said assembly to a first substrate (7) to be gasketed by contacting said second layer of said assembly with said first substrate;
(c) removing said fourth (5) and fifth (6) layers of said assembly; and
(d) contacting said third layer (4) of said assembly and its adhered first substrate (7) with a second substrate (8), thereby providing a sealing gasket between said two substrates.

8. A composite sealing gasket assembly comprising:
(a) a first layer of release paper (1) adhered to;
(b) a second layer of high-adhesion adhesive (2) which is applied to;
(c) a third layer of carrier film (3) which carries and supports said second and said first layers;
(d) a fourth layer of high-adhesion adhesive (5) which is respectively bonded to said third layer (3);
(e) a fifth layer of microporous polymer sealing gasketing material (4), which is adhered on one side to said fourth layer adhesive (5) and on the other side to;
(f) a sixth layer of low-adhesion adhesive (5) upon which is layered and adhered on the other side to; and
(g) a seventh carrier sheet layer (6).

9. An assembly of Claim 8 wherein said fifth layer (4) comprises microporous polytetrafluoroethylene, a mat of fibrillated polytetrafluoroethylene fibers, stretched filled polytetrafluoroethylene, or unstretched filled polytetrafluoroethylene.

10. A process for assembling the sealing gasket assembly of Claims 8 or 9.

11. A process for preparing a sealing gasket assembly which comprises a first layer of release paper (1), a second layer of high-tack adhesive (2), a third layer of carrier film (3), a fourth layer of high-tack adhesive (2), a fifth layer of microporous polymer sealing gasketing (4), a sixth layer of low-tack adhesive (5), and a seventh layer of release paper (6) comprising the steps:
(a) assembling and adhering together said layers one through four by known bonding processes for application of adhesives to carrier films and release papers and layering said adhesive coated films together with a release paper into a unit;
(b) adhering the adhesive side of said unit of layers one through four to one side of said fifth layer of microporous polymer sealing gasketing material (4); and
(c) adhering to the other side of said fifth layer the adhesive side (5) of the unit of the sixth layer of low-tack adhesive (5) pre-assembled onto the seventh layer of release sheet (6).

12. A process of Claim 11 wherein said fifth layer (4) comprises microporous polytetrafluoroethylene.

13. A sealing gasket assembly prepared by the process of Claim 11.

14. A sealing gasket assembly prepared by the process of Claim 12.

15. A process for applying to a substrate a sealing gasket assembly of a first layer of release paper (1), a second layer of high-adhesion adhesive (2), a third layer of carrier film (3) to carry and support said first and second layers, a fourth layer of high-adhesion adhesive (2), a fifth layer of microporous polymer gasketing material (4), a sixth layer of low-adhesion adhesive (5), and a seventh layer of release sheet (6) comprising the steps of:
(a) removing said first layer (1) from said assembly;
(b) applying said assembly to a first substrate (7) to be gasketed by contacting said second layer (2) of said assembly with said first substrate (7);
(c) removing said sixth (5) and seventh layers (6) of said assembly; and
(d) contacting said fifth layer (4) of said assembly and its adhered first substrate (7) with a second substrate (8), thereby providing a sealing gasket between said two substrates.

16. A process of Claim 15 wherein said fifth (4) layer comprises microporous polytetrafluoroethylene.

17. A sealed pair of substrates prepared by the process of Claims 4 and 7.

## Revendications

1. Structure de joint d'étanchéité composite, comportant:
(a) une première couche de papier pelable (1) adhérant à :
(b) une seconde couche d'un adhésif (2) à forte adhérence qui est appliquée sur :
(c) une troisième couche d'un matériau polymère microporeux (4) pour joint d'étanchéité, adhérant d'un côté à ladite seconde couche adhésive (2) et de l'autre côté à :
(d) une quatrième couche d'un adhésif (5) à faible adhérence sur laquelle est posée, adhérant de l'autre côté à ;
(e) une cinquième couche sous forme d'une feuille support (6) supportant la structure.

2. Structure de la revendication 1, dans laquelle ladite troisième couche (4) est constituée d'un polytétrafluoroéthylène microporeux, d'un tapis de fibres de polytétrafluoroéthylène fibrillé, d'un polytétrafluoroéthylène chargé et étiré ou d'un polytétrafluoroéthylène chargé et non étiré.

3. Procédé d'assemblage de la structure de joint d'étanchéité de la revendication 1 ou 2.

4. Procédé de préparation d'une structure de joint d'étanchéité qui comporte une première couche de papier pelable (1), une seconde couche d'un adhésif (2) à forte adhérence, une troisième couche d'un matériau polymère microporeux (4) pour joint d'étanchéité, une quatrième couche d'un adhésif (5) à faible adhérence et une cinquième couche de feuille support (6), procédé comportant les étapes consistant à:
(a) assembler et faire adhérer ensemble lesdites couches un (1) et deux (2) par des processus de liaison connus pour application d'adhésifs sur des papiers pelables et en formant une couche avec ledit adhésif et un papier pelable pour donner un sous-ensemble;
(b) faire adhérer la face adhésive (2) dudit sous-ensemble constitué des couches un et deux sur une première face de ladite troisième couche du matériau polymère microporeux (4) pour joint d'étanchéité; et
(c) faire adhérer sur l'autre face de ladite troisième couche la face adhésive (5) du sous-ensemble constitué de la quatrième couche d'adhésif à faible adhérence (5) préassemblé sur la cinquième couche constituée de la feuille support (6).

5. Procédé de la revendication 4 dans lequel ladite troisième couche (4) est constituée de polytétrafluoroéthylène microporeux.

6. Structure de joint d'étanchéité préparée par le procédé de la revendication 4.

7. Procédé pour appliquer sur un substrat une structure de joint d'étanchéité comportant une première couche de papier pelable (1), une seconde couche d'adhésif à forte adhérence (2), une troisième couche d'un matériau polymère microporeux (4) pour joint d'étanchéité, une quatrième couche d'un adhésif à faible adhérence (5), et une cinquième couche d'une feuille support (6), procédé comportant les étapes consistant à:
(a) enlever de ladite structure ladite première couche (1);
(b) appliquer ladite structure sur une premier substrat (7) devant recevoir le joint d'étanchéité par mise en contact de ladite seconde couche de ladite structure avec ledit premier substrat;
(c) enlever ladite quatrième (5) et ladite cinquième (6) couches de ladite structure; et
(d) mettre en contact ladite troisième couche (4) de ladite structure et son premier substrat (7), qui y a adhéré, avec un second substrat (8), réalisant ainsi un joint d'étanchéité entre les deux dits substrats.

8. Structure de joint d'étanchéité composite comportant:
(a) une première couche de papier pelable (1) adhérant à:
(b) une seconde couche d'un adhésif (2) à forte adhérence qui est appliquée sur;
(c) une troisième couche d'un film support (3) qui porte et supporte ladite seconde et ladite première couches;
(d) une quatrième couche d'un adhésif (5) à forte adhérence qui est respectivement lié à ladite troisième couche (3);
(e) une cinquième couche d'un matériau polymère microporeux (4) pour joint d'étanchéité, adhérant d'un côté à ladite quatrième couche adhésive (5) et de l'autre côté à;
(f) une sixième couche d'un adhésif (5) à faible adhérence sur laquelle est posée, adhérente,de l'autre côté,
(g) une septième couche (6) sous forme d'une feuille support.

9. Structure de la revendication 8, dans laquelle ladite cinquième couche (4) est constituée d'un polytétrafluoroéthylène microporeux, d'un tapis de fibres de polytétrafluoroéthylène fibrillé, d'un polytétrafluoroéthylène chargé et étiré ou d'un polytétrafluoroéthylène chargé et non étiré.

10. Procédé d'assemblage de la structure de joint d'étanchéité de la revendication 8 ou 9.

11. Procédé de préparation d'une structure de joint d'étanchéité qui comporte une première couche de papier pelable (1), une seconde couche d'un adhésif à forte adhérence (2), une troisième couche d'un film support (3), une quatrième couche d'un adhésif (2) à forte adhérence, une cinquième couche d'un matériau polymère microporeux (4) pour joint d'étanchéité, une sixième couche d'un adhésif (5) à faible adhérence, et une septième couche de papier pelable (6), procédé comportant les étapes consistant à:
(a) assembler et faire adhérer ensemble lesdites couches une à quatre par des processus de liaison connus pour application d'adhésif à des films supports et à des papiers pelables et en formant une couche avec lesdits films revêtus d'adhésif et un papier pelable pour donner un sous-ensemble;
(b) faire adhérer la face adhésive dudit sous-ensemble constitué des couches une à quatre sur une première face de ladite cinquième couche de matériau polymère microporeux (4) pour joint d'étanchéité; et
(c) faire adhérer sur l'autre face de ladite cinquième couche la face adhésive (5) du sous-ensemble constitué de la sixième couche d'un adhésif (5) à faible adhérence préassemblé sur la septième couche de feuille pelable (6).

12. Procédé de la revendication 11 dans lequel ladite cinquième couche (4) est constituée de polytétrafluoroéthylène microporeux.

13. Structure de joint d'étanchéité préparée par le procédé de la revendication 11.

14. Structure de joint d'étanchéité préparée par le procédé de la revendication 12.

15. Procédé pour appliquer sur un substrat une structure de joint d'étanchéité constituée d'une première couche de papier pelable (1), d'une seconde couche d'un adhésif (2) à forte adhérence, d'une troisième couche d'un film support (3) pour porter et supporter ladite première et ladite seconde couches, d'une quatrième couche d'un adhésif (2) à forte adhérence, d'une cinquième couche d'un matériau polymère microporeux (4) pour joint d'étanchéité, d'une sixième couche d'un adhésif (5) à faible adhérence et d'une septième couche d'une feuille pelable (6), procédé comportant les étapes consistant à:
(a) enlever de ladite structure ladite première couche (1);
(b) appliquer ladite structure sur un premier substrat (7) devant recevoir le joint d'étanchéité par mise en contact de ladite seconde couche (2) de ladite structure avec ledit premier substrat (7);
(c) enlever ladite sixième (5) et ladite septième couches (6) de ladite structure; et
(d) mettre en contact ladite cinquième couche (4) de ladite structure et son premier substrat (7), qui y a adhéré, avec un second substrat (8), réalisant ainsi un joint d'étanchéité entre les deux dits substrats.

16. Procédé de la revendication 15, dans lequel ladite quatrième (4) couche est constituée d'un polytétrafluoéthylène microporeux.

17. Paire de substrats, rendue étanche, préparée par le procédé des revendications 4 et 7.

## Patentansprüche

1. Dichtungsanordnung mit
(a) einer ersten Schicht aus abziehbarem Papier (1), haftend auf:
(b) einer zweiten Schicht aus stark haftendem Kleber (2), der aufgebracht ist auf :
(c) einer dritte Schicht aus mikroporösem Polymerdichtungsmaterial (4), das auf einer Seite mit der zweiten Kleberschicht (2) und auf der anderen Seite haftet auf:
(d) einer vierten Schicht aus gering haftendem Kleber (5), auf dem auf der anderen Seite
(e) eine fünfte den Aufbau stützende Trägerlage (6) aufgeschichtet und geklebt ist.

2. Anordnung nach Anspruch 1, wobei die dritte Schicht (4) mikroporöses Polytetrafluorethylen, eine Matte aus feinfasrigen Polytetrafluorethylenfasern, gestrecktes, gefülltes Polytetrafluorethylen, oder ungestrecktes, gefülltes Polytetrafluorethylen enthält.

3. Verfahren zum Aufbauen der Dichtungsanordnung nach Ansprüchen 1 oder 2.

4. Verfahren zum Herstellen einer Dichtungsanordnung mit einer ersten Schicht aus abziehbarem Papier (1), einer zweiten Schicht aus stark haftendem Kleber (2), einer dritten Schicht aus mikroporösem, abdichtenden Polymer (4), einer vierten Schicht aus gering haftendem Kleber (5) und einer fünften Schicht aus Trägerlage (6), mit den Stufen:
(a) Anordnen und miteinander Verkleben der Schichten (1) und (2) durch bekannte Bindungsverfahren zum Anwenden von Klebern auf abziehbaren Papieren und Aufschichten des Klebers zusammen mit einem abziehbaren Papier zu einer Einheit;
(b) Verkleben der klebenden Seite (2) der Einheit aus Schichten (1) und (2) auf einer Seite der dritten Schicht von mikroporösem Polymerdichtungsmaterial (4) ; und
(c) Verkleben der anderen Seite der dritten Schicht mit der Kleberseite (5) der Einheit der vierten Schicht aus gering haftendem Kleber (5), zuvor angeordnet auf der fünften Schicht aus Trägerlage (6).

5. Verfahren nach Anspruch 4, wobei die dritte Schicht (4) mikroporöses Polytetrafluorethylen enthält.

6. Dichtungsanordnung, hergestellt durch das Verfahren nach Anspruch 4.

7. Verfahren zum Aufbringen einer Dichtungsanordnung aus einer ersten Schicht aus abziehbarem Papier (1), einer zweiten Schicht aus stark haftendem Kleber (2), einer dritten Schicht aus mikroporösem Polymerdichtungsmaterial (4), einer vierten Schicht aus gering haftendem Kleber (5) und einer fünften Schicht aus Trägerlage (6) auf ein Substrat, mit den Stufen:
(a) Entfernen der ersten Schicht (1) von der Anordnung;
(b) Aufbringen der Anordnung auf ein erstes Substrat (7), das durch Kontakt mit der zweiten Schicht der Anordnung mit dem ersten Substrat abgedichtet wird;
(c) Entfernen der vierten (5) und der fünften (6) Schichten der Anordnung; und
(d) Inkontaktbringen der dritten Schicht (4) der Anordnung und dessen verklebtem, ersten Substrat (7) mit einem zweiten Substrat (8), wodurch eine Dichtung zwischen beiden Substraten ausgebildet wird.

8. Dichtungsanordnung mit:
(a) einer ersten Schicht aus abziehbarem Papier (1), verklebt mit
(b) einer zweiten Schicht aus stark haftendem Kleber (2), aufgebracht auf
(c) eine dritte Schicht aus Trägerfolie (3), die die zweiten und ersten Schichten trägt und stützt;
(d) einer vierten Schicht aus stark haftendem Kleber (5), der entsprechend mit der dritten Schicht (3) verbunden ist;
(e) einer fünften Schicht aus mikroporösem Polymerdichtungsmaterial (4), verklebt auf der einen Seite mit der vierten Schicht aus Kleber (5) und auf der anderen Seite mit
(f) einer sechsten Schicht aus gering haftendem Kleber (5), auf der auf der anderen Seite
(g) eine siebte Trägerlagenschicht (6) aufgeschichtet und verklebt ist.

9. Anordnung nach Anspruch 8, wobei die fünfte Schicht (4) mikroporöses Polytetrafluorethylen, eine Matte aus feinfasrigen Polytetrafluorethylenfasern, gestrecktes, gefülltes Polytetrafluorethylen oder ungestrecktes, gefülltes Polytetrafluorethylen enthält.

10. Verfahren zum Aufbau der Dichtungsanordnung nach Ansprüchen 8 oder 9.

11. Verfahren zum Herstellen einer Dichtungsanordnung mit einer ersten Schicht aus abziehbarem Papier (1), einer zweiten Schicht aus stark haftendem Kleber (2), einer dritten Schicht aus Trägerfolie (3), einer vierten Schicht aus stark haftendem Kleber (2), einer fünften Schicht aus mikroporösem, dichtenden Polymer (4), einer sechsten Schicht aus gering haftendem Kleber (5) und einer siebten Schicht aus abziehbarem Papier (6) mit den Stufen:
(a) Zusammensetzen und Verkleben der Schichten 1-4 durch für Anwendung von Klebern für Trägerfolien und abziehbaren Papieren bekannte Bindungsverfahren und Aufschichten der mit kleberbeschichteten Folien zusammen mit abziehbarem Papier zu einer Einheit;
(b) Kleben der Klebeseite der Einheit aus Schichten 1-4 auf eine Seite der fünften Schicht aus mikroporösem Polymerdichtungsmaterial (4); und
(c) Verkleben mit der anderen Seite der fünften Schicht die Klebeseite (5) der Einheit aus der sechsten Schicht aus gering haftendem Kleber (5), zuvor aufgebracht auf die siebte Schicht der abziehbaren (Release) Lage (6).

12. Verfahren nach Anspruch 11, wobei die fünfte Schicht (4) mikroporöses Polytetrafluorethylen enthält.

13. Dichtungsanordnung, hergestellt durch das Verfahren nach Anspruch 11.

14. Dichtungsanordnung, hergestellt durch das Verfahren nach Anspruch 12.

15. Verfahren zum Aufbringen einer Dichtungsanordnung aus einer ersten Schicht aus abziehbarem Papier (1), einer zweiten Schicht aus stark haftendem Kleber (2), einer dritten Schicht aus Trägerfolie (3), zum Tragen und Stützen der ersten und zweiten Schichten, einer vierten Schicht aus stark haftendem Kleber (2), einer fünften Schicht aus mikroporösem Polymerdichtungsmaterial (4), einer sechsten Schicht aus gering haftendem Kleber (5) und einer siebten Schicht aus abziehbarer Lage (6), auf ein Substrat, mit den Stufen:
(a) Entfernen der ersten Schicht (1) von der Anordnung;
(b) Aufbringen der Anordnung auf ein erstes Substrat (7), abzudichten durch Inkontaktbringen der zweiten Schicht (2) der Anordnung mit dem ersten Substrat (7);
(c) Entfernen der sechsten (5) und siebten Schichten (6) der Anordnung; und
(d) Inkontaktbringen der fünften Schicht (4) der Anordnung und dessen anhaftenden ersten Substrat (7) mit einem zweiten Substrat (8), wodurch eine Dichtung zwischen beiden Substraten ausgebildet wird.

16. Verfahren nach Anspruch 15, wobei die fünfte Schicht (4) mikroporöses Polytetrafluorethylen enthält.

17. Abgedichtetes Substratpaar, hergestellt durch das Verfahren nach Ansprüchen 4 und 7.
